(19) Europäisches Patentamt
European Patent Office
Office européen des brevets

(11) **EP 3 554 277 B1**

(12) **EUROPEAN PATENT SPECIFICATION**

(45) Date of publication and mention
of the grant of the patent:
**01.04.2020 Bulletin 2020/14**

(21) Application number: **17800870.2**

(22) Date of filing: **21.11.2017**

(51) Int Cl.:
*A23L 27/60* (2016.01)     *A23D 7/005* (2006.01)
*A23J 1/09* (2006.01)

(86) International application number:
**PCT/EP2017/079833**

(87) International publication number:
**WO 2018/114174 (28.06.2018 Gazette 2018/26)**

(54) **EDIBLE OIL-IN-WATER EMULSION COMPRISING EGG YOLK COMPONENTS**

ESSBARE ÖL-IN-WASSER-EMULSION MIT EIGELBKOMPONENTEN

ÉMULSION HUILE DANS L'EAU COMESTIBLE COMPRENANT DES COMPOSANTS À BASE DE JAUNE D' UF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2016 EP 16205004**

(43) Date of publication of application:
**23.10.2019 Bulletin 2019/43**

(73) Proprietors:
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**
• **Unilever PLC**
**London, Greater London EC4Y 0DY (GB)**
Designated Contracting States:
**CY GB IE MT**

(72) Inventors:
• **DE FOLTER, Julius, Wouter, Johannes**
**3133 AT Vlaardingen (NL)**
• **SCHUMM, Stephan, Georg**
**3133 AT Vlaardingen (NL)**

(74) Representative: **Fijnvandraat, Arnoldus**
**Unilever Patent Group**
**Bronland 14**
**6708 WH Wageningen (NL)**

(56) References cited:
**WO-A1-2008/080737     JP-A- 2003 135 034**
**US-B1- 6 235 336**

• **MINE ET AL: "Emulsifying characterization of hens egg yolk proteins in oil-in-water emulsions", FOOD HYDROCOLLOIDS, ELSEVIER BV, NL, vol. 12, no. 4, 1 October 1998 (1998-10-01), pages 409-415, XP027492417, ISSN: 0268-005X, DOI: 10.1016/S0268-005X(98)00054-X [retrieved on 1998-10-01]**
• **M LE DENMAT ET AL: "Characterisation of emulsion properties and of interface composition in O/W emulsions prepared with hen egg yolk, plasma and granules", FOOD HYDROCOLLOIDS, vol. 14, no. 6, 1 November 2000 (2000-11-01), pages 539-549, XP055239839, NL ISSN: 0268-005X, DOI: 10.1016/S0268-005X(00)00034-5**

**Description**

**TECHNICAL FIELD OF THE INVENTION**

The present invention relates to the manufacture of edible oil-in-water emulsions that are stabilised through the incorporation of egg yolk components. More particularly, the present invention relates to a method of preparing an oil-in-water emulsion having a pH in the range of 3.0 to 5.0 and comprising 30-78 wt.% of oil and 65-20 wt.% water, and further 0.5-6 wt.% hen's egg yolk proteinaceous component by dry weight, said method comprising the steps of:

- increasing the pH of a liquid aqueous mixture comprising a first egg yolk plasma fraction to a pH of at least 9 and keeping the liquid aqueous mixture at said pH for 1-300 minutes followed by decreasing the pH of the mixture to a pH of 7 or less to produce an alkaline treated egg yolk plasma liquid comprising alkaline treated egg yolk plasma fraction;
- preparing a first pre-emulsion by combining oil, water, egg yolk granules fraction • and optionally a second egg yolk plasma fraction;
- combining the alkaline treated egg yolk plasma liquid with the pre-emulsion to produce a second pre-emulsion; introducing into the second pre-emulsion one or more acidulants; and
- homogenizing the second pre-emulsion to obtain an oil-in-water emulsion.

Reduced fat mayonnaise is a typical example of an oil-in-water emulsion that can be prepared by the aforementioned manufacturing method.

**BACKGROUND OF THE INVENTION**

Egg-yolk is widely used in a variety of prepared foodstuffs. Egg yolk is a very effective emulsifying agent and as such it is frequently applied to stabilise emulsified foods such as mayonnaises, dressings, sauces, soups, fat containing cake batters, (whippable) creams and ice cream.

Egg yolk contains a high level of fat and is itself an emulsion comprising a dispersion of oil droplets in a continuous aqueous phase. Hen's egg yolk has a total solid content of approximately 50 to 52% and is composed of 15.5 to 16.5% protein, 31.5 to 34.5% lipid, 0.5 to 1.5% carbohydrate, 0.9 to 1.2% ash and water. The egg-yolk lipids comprise as their main components approximately 62-65% triglyceride, 29-33% phospholipid and about 5% cholesterol. Egg yolk proteins are present as free proteins (mainly livetins and phosvitins) or as apoproteins, which from complex assemblies with lipids. These assemblies are called lipoproteins. In terms of dry matter, the egg yolk proteinaceous fraction (e.g. free proteins and lipoproteins including lipids and apoprotein) consists of about 68% low-density lipoproteins (LDL), 16% high-density lipoproteins (HDL), 10% livetins and 4% phosvitins and about 2% minor proteins.

The high level of phospholipids makes egg yolk a very stable emulsion in itself, in addition to being an emulsifying agent. Besides phospholipids egg yolk contains other emulsifying agents, notably hydrophobic and hydrophilic proteins, and cholesterol. The aforementioned emulsifying agents are believed to interact during emulsion formation though the nature of such interactions has not fully been elucidated.

Egg yolk can be fractionated into a plasma and a granules fraction by diluting whole egg yolk with aqueous saline solution followed by centrifugation to give a supernatant made up of plasma fraction (77-81wt.% of yolk dry matter) and the precipitate that contains the granules fraction (19-23 wt.% of yolk dry matter). The plasma fraction of hen's egg yolk contains about 25 wt.% proteins (free proteins and apoproteins) and about 73 wt.% lipids (mainly in the form of lipoproteins), both calculated by weight of dry matter. The proteinaceous component of the plasma fraction contains low-density lipoprotein ($\pm$85 wt.%) and the water-soluble globular protein livetin ($\pm$15 wt.%). The granules fraction of hen's egg yolk typically contains about 64 wt.% protein (free proteins and apoproteins) and 31 wt.% lipids (including lipids contained in lipoproteins). The proteinaceous component of the granule fraction contains high density lipoprotein ($\pm$72 wt.%), phosvitin ($\pm$16 wt.%) and low density lipoprotein ($\pm$12 wt.%).

Traditional mayonnaise is an oil-in-water type emulsion comprising vegetable oil (70-80%), egg yolk (5-8%), salt, vinegar (to achieve a pH of the water phase of less than 4.2 to be considered an acid stable food), mustard, and optionally sugar, pepper and herbs. The oil is generally present in mayonnaise as a dispersed phase with an average droplet size of 2-10 $\mu$m. Because of the droplet size and the high amount of dispersed phase, mayonnaise contains a very close packing of oil droplets. The close packing of oil droplets, in combination with the very thin layer of aqueous phase separating said droplets, causes mayonnaise to exhibit a very desirable rheology that is perceived by consumers as a creamy thickness.

There is an ever-increasing demand for mayonnaise-type products having a lower content of oil but exhibiting the same sensorial properties and mouthfeel as full-fat mayonnaise. However, the lowering of the oil content of a standard mayonnaise-type formulation results in a less dense packing of the oil droplets within the continuous aqueous phase.

As a result, the thickness or viscosity of the emulsion decreases dramatically and the emulsion becomes undesirably soft or even pourable.

It is known in the art to overcome the aforementioned viscosity decrease by adding thickeners, such as gums and/or starch, to the aqueous phase. The use of such thickeners, however, affects the taste and mouthfeel of the mayonnaise in an unfavourable manner. The use of starch, for instance, usually leads to sticky, pasty products.

Another solution to the above problem is to rigorously decrease the size of the oil droplets. If the oil droplets are very small (e.g. less than 1 μm), and the amount of oil is not very low, this may yield an acceptable result. However, these very small droplets are very difficult to produce, i.e., extremely high shear needs to be applied during emulsification and additives are needed to stabilise the small droplets (the normal amount of 3.5-8% egg yolk will not be sufficient).

WO 2008/080737 describes a process for the manufacture of mayonnaise type oil-in-water emulsions having a reduced oil content, said process comprising the successive steps of:

- combining water, oil, egg yolk granule proteins and optionally other food ingredients;
- homogenising the combined ingredients to obtain a water-continuous oil-and-water emulsion; and
- addition of an acidulant so as to decrease the pH of the emulsion by at least 1 point,

wherein the weight ratio of the egg yolk granule proteins selected from high density lipoprotein (HDL) and phosvitin to the egg yolk plasma proteins selected from low density lipoprotein (LDL) and livetin exceeds 1:1.

The method described in WO 2008/080737 has the drawback that it requires fractionation of egg yolk into egg yolk plasma fraction and egg yolk granules fraction, while only a minor portion of the egg yolk plasma fraction that is generated during the fractionation is used.

US 6,235,336 describes a process for preparing an aqueous egg yolk composition having improved egg yolk functionality, said process comprising:

- forming an aqueous egg yolk mixture;
- adding an alkaline material to the aqueous egg yolk mixture in an amount sufficient to adjust the pH of the aqueous egg yolk mixture to about 7.5 or above;
- heating the pH-adjusted aqueous egg yolk mixture to 40-80°C for a period of at least 30 minutes;
- cooling the heat treated aqueous egg yolk mixture to or near ambient temperatures; and
- adding an acidic material to the cooled aqueous egg yolk mixture to a neutral pH, thereby forming the aqueous egg yolk composition.

This US patent also describes the application of the aqueous egg yolk composition in mayonnaise having an oil content of 75 wt.%. US 6,235,336 relates to a functionalizing heat and alkaline treatment of the whole egg yolk with all it components simultaneously.

## SUMMARY OF THE INVENTION

The inventors have developed an alternative method for the preparation of high quality, spoonable mayonnaise products with reduced fat content. The method according to the present invention makes use of egg yolk plasma fraction and egg yolk granules fraction, but employs these fractions in such amounts that the end product contains egg yolk components in relative concentrations that are similar to those found in ordinary egg yolk. Consequently, unlike the method described in WO 2008/080737, the present method makes it possible to utilize most of the egg yolk material that is produced during fractionation of egg yolk into a plasma fraction and a granules fraction. The egg yolk fractions employed in the present process can be produced from fresh or pasteurised egg yolk.

The present method produces an edible oil-in-water emulsion having a pH in the range of 3.0 to 5.0 and comprising 30-78 wt.% of oil and 65-20 wt.% water, and further 0.5-6 wt.% hen's egg yolk proteinaceous component by dry weight, said egg yolk proteinaceous component consisting of a combination of low-density lipoprotein (LDL), livetin, high-density lipoprotein (HDL), and phosvitin, and the method comprises the steps of:

a. increasing the pH of a liquid aqueous mixture comprising a first egg yolk plasma fraction to a pH of at least 9 and keeping the liquid aqueous mixture at said pH value for 1-300 minutes followed by decreasing the pH of the mixture to a pH of 7 or less to produce an alkaline treated egg yolk plasma liquid comprising alkaline treated egg yolk plasma fraction;

b. preparing a first pre-emulsion by combining oil, water, egg yolk granules fraction and optionally a second egg yolk plasma fraction;

c. combining the alkaline treated egg yolk plasma liquid with the pre-emulsion to produce a second pre-emulsion;

d. introducing into the second pre-emulsion one or more acidulants; and

e. homogenizing the second pre-emulsion to obtain an oil-in-water emulsion;

wherein the egg yolk proteinaceous component of the oil-in-water emulsion has the following composition:

- 60-75 wt.% LDL;
- 8-14 wt.% livetin;
- 11-18 wt.% HDL;
- 2-5 wt.% phosvitin.

The composition of the egg yolk proteinaceous component of the oil-in-water emulsion is quite similar to that of ordinary egg yolk.

## DETAILED DESCRIPTION OF THE INVENTION

Thus, the present invention provides a method of preparing an edible oil-in-water emulsion having a pH in the range of 3.0 to 5.0 and comprising 30-78 wt.% of oil and 65-20 wt.% water, and further 0.5-6 wt.% hen's egg yolk proteinaceous component by dry weight, said egg yolk proteinaceous component consisting of a combination of low-density lipoprotein (LDL), livetin, high-density lipoprotein (HDL), and phosvitin, said method comprising the steps of:

a. increasing the pH of a liquid aqueous mixture comprising a first egg yolk plasma fraction to a pH of at least 9 and keeping the liquid aqueous mixture at said pH value for 1-300 minutes followed by decreasing the pH of the mixture to a pH of 7 or less to produce an alkaline treated egg yolk plasma liquid comprising alkaline treated egg yolk plasma fraction;

b. preparing a first pre-emulsion by combining oil, water, egg yolk granules fraction and optionally a second egg yolk plasma fraction;

c. combining the alkaline treated egg yolk plasma liquid with the pre-emulsion to produce a second pre-emulsion;

d. introducing into the second pre-emulsion one or more acidulants; and

e. homogenizing the second pre-emulsion to obtain an oil-in-water emulsion;

wherein the egg yolk proteinaceous component of the oil-in-water emulsion has the following composition:

- 60-75 wt.% LDL;
- 8-14 wt.% livetin;
- 11-18 wt.% HDL;
- 2-5 wt.% phosvitin.

The term "egg yolk" as used herein refers to the yolk obtained from hen's eggs.

The term "high density lipoprotein" (HDL) as used herein refers to a protein-lipid complex that is found in substantial concentrations in birds egg yolk. HDL comprises a protein with a hydrophobic pocket that holds the lipid component. HDL contains 75-80% apoproteins and 20-25% lipids. These lipids are composed of 65% phospholipids, 30% triglycerides and 5% cholesterol. Two sub-groups of HDL can be separated by ion chromatography: alpha- and beta-HDL. Alpha-HDL contains 6 time more sialic acid and 2 times more phosphorus than beta-HDL. Consequently, alpha-HDL is more acidic than beta-HDL. Except for these differences, both types of HDL have similar chemical compositions. HDL has a molecular weight of approximately 400 kDa, a diameter of about 7-20 nm and a density of approximately 1.12 g/ml . Unlike LDL, HDL does not have a spherical structure, but its pseudo- molecular structure resembles that of globular proteins. Phospholipids contribute to stabilise the structure of HDL in water. The term "low density lipoprotein" (LDL) as used herein refers to a globular complex that is a major component of birds egg yolk, said globular complex having a diameter of 17-60 nm and a density of about 0.982 g/ml. LDL comprises an inner core largely consisting of triglycerides and cholesteryl esters and a surface layer that mainly consists of phospholipids, cholesterol and apoproteins. The apoproteins represent 11-17 wt. % of LDL, the lipid components 83-89 wt. % . These lipids are composed of about 74% neutral lipids, 26% phospholipids. LDL is composed of 2 sub-groups: $LDL_1$ ($10.10^6$ Da) and $LDL_2$ ($3.10^6$ Da). $LDL_1$ represent 20% of total LDL and contains twice the amount of proteins as $LDL_2$. Chemical compositions of both types of LDL are similar. Proteins of LDL are composed of 6 apoproteins. The major apoprotein (130 kDa) accounts for more than 70% of the apoproteins. The second apoprotein represents about 20% of the apoproteins and its molecular weight is 15 kDa. Their isoelectric point is ranged from 6.5 to 7.3.

The term "edible" as used herein means that the emulsion can be ingested and consumed in reasonable quantities without any toxic or other acute negative health effect. It will be understood therefore that the acidic emulsion of the present invention preferably does not contain any nonfood grade additives.

The term "egg yolk proteinaceous component" as used herein, unless indicated otherwise, refers to the combination of HDL, phosvitin, LDL and livetin. Thus, the composition of the egg yolk proteinaceous component is determined by the respective concentrations of these of these four proteinaceous components. By definition, the sum of the concentrations of these four components in egg yolk proteinaceous component adds up to 100%. It is noted that besides HDL, phosvitin, LDL and livetin, egg yolk contains a few minor proteins that are not encompassed by the term "proteinaceous component" as used herein.

The respective concentrations of HDL, phosvitin, LDL and livetin can be determined using the analytical method described by Burley et al. (ISOLATION AND COMPOSITION OF AVIAN EGG YOLK GRANULES AND THEIR CONSTITUENT α-AND β-LIPOVITELLINS, Canadian Journal of Biochemistry and Physiology, 1961, Vol. 39, No. 8 : pp. 1295-1307).

The benefits of the present invention are particularly pronounced in emulsions comprising from 50-75 wt.% of oil and 20-48 wt.% of water. Oil is preferably present in an amount of less than 72 wt%, preferably less than 70wt%. It can preferably be present in an amount of from 50 to 72 wt%, preferably combined with from 26 to 48 wt% water; preferably from 50 to 70 wt%, more preferably from 50 to less than 70 wt% oil, preferably combined with from 28 to 48 wt% water; even more preferably of from 65 to less than 70 wt% oil, preferably combined with from 28 to 33 wt% water. Even more preferably, the emulsion contains from 65-72 wt.% of oil and from 26-33 wt.% water even more preferably from 65-70 wt.% of oil and from 28-33 wt.% water. The combination of oil and water preferably constitutes at least 80 wt.%, more preferably at least 90 wt.%, even more preferably at least 94% of the oil-in-water emulsion.

A typical example of an emulsion that can be prepared by the present method is a reduced fat mayonnaise.

The oil that is used in the preparation of the oil-in-water emulsion can suitably contain a variety of lipid ingredients such as triglycerides, diglycerides, monoglycerides, phospholipids and free fatty acids. Preferably, triglycerides represent at least 80 wt.%, more preferably at least 90 wt.% and most preferably at least 95 wt.% of the oil.

Preferably, at 20°C, the oil contains less than 20 wt.%, more preferably less than 10 wt.% of solid fat. Most preferably, at the aforementioned temperature the oil contains no solid fat.

The solid fat content of a fat at a temperature of t °C ($N_t$) can suitably be determined using ISO 8292-1 (2012) - Determination of solid fat content by pulsed NMR.

Typically, the oil-in-water emulsion comprises a dispersed oil phase having a mean diameter (d3,2) in the range of 0.5-75 $\mu$m. As explained herein before the present invention enables the preparation of a stable acidic emulsion without the need of decreasing the oil droplet size to very low values, e.g. below 1 $\mu$m. At the same time it is preferred that the oil droplet size is small enough to prevent significant coalescence. Hence, according to a preferred embodiment, the emulsion comprises a dispersed oil phase having a mean diameter (d3,2) in the range of 1-50 $\mu$m, more preferably in the range of 2-20 $\mu$m. The measurement of the particle size distribution is suitably performed using a laser diffraction based instrument (MASTERSIZER 2000). Samples are prepared by diluting 1 ml of sample with 9 ml of a 1 % sodium dodecyl sulphate solution (SDS) (1:10) in order to deflocculate the oil droplets. Before measuring, the sample is agitated for approximately 30 seconds and left out for 1 h. The measurements are performed directly after processing. The value of the Sauter mean diameter d3.2 is calculated as follows:

$$d_{3.2} = \frac{\sum n_i d_i^3}{\sum n_i d_i^2}$$

The oil-in-water emulsion that is prepared in the present method typically has a pH in the range of 3.2-4.7, especially within the range of 3.4-4.0

The present method preferably comprises the introduction of one or more acidulants into the second pre-emulsion. Preferably these one or more acidulants are selected from acetic acid, citric acid, malic acid and lactic acid. More preferably, the method comprises addition of acetic acid, citric acid or a combination thereof. It is noted that acetic acid can be added in the form of, for instance, vinegar. Citric acid can be added in the form of, for example, lemon juice.

The one or more acidulants are typically introduced into the second pre-emulsion in a total concentration of 0.05-8%, more preferably 0.1-6 % by weight of water.

According to a particularly preferred embodiment, the one or more acidulants are added to the second pre-emulsion before the homogenization.

The aqueous liquid typically contains 0.2 to 10 wt.%, more preferably of 0.4 to 5 wt.% sodium chloride in dissociated form prior to the alkaline treatment of step a).

The sodium chloride content of the oil-in-water emulsion is preferably in the range of 3-12%, more preferably of 4-10% and most preferably 4.5-9% by weight of water.

The acidic emulsion of the present invention, besides oil, water, egg yolk components, acidulants and salt, may suitably contain a variety of other ingredients, such as flavouring materials, colourings and anti-oxidants. Examples of flavouring materials that may advantageously be incorporated in the present emulsion include sucrose, mustard, herbs, spices, lemon juice and mixtures thereof. According to a particularly preferred embodiment, the emulsion contains at least one of sucrose and mustard.

The egg yolk that is employed in the present method is hen's egg yolk.

The liquid aqueous mixture that is employed in step a) of the present method typically contains 40-80 wt. % water, preferably 45-70 wt. % water, more preferably 50-65 wt. % water.

The egg yolk proteinaceous component, i.e. the combination of LDL, livetin, HDL and phosvitin, typically constitutes 20-60 wt.%, more preferably at least 30-55 wt.% and most preferably 35-50 wt.% of the alkaline treated liquid aqueous mixture of the present method.

In accordance with a preferred embodiment, the pH of the liquid aqueous mixture is increased to a value between 9.5 and 13, preferably between 9.8 and 12.5, even more preferably between 10.0 and 12.0 and the aqueous mixture is kept at this pH, for at least 1 minute, more preferably at least 2 minutes, even more preferable for at least 5 minutes. Typically, the alkaline treatment of the liquid aqueous mixture does not exceed 240 minutes, more preferably it does not exceed 180 minutes, most preferably it does not exceed 120 minutes.

The pH of the liquid aqueous mixture is preferably increased by adding a food grade base, more preferably a food grade alkalizing agent selected from alkali metal hydroxides, alkaline earth metal hydroxide and combinations thereof. In a preferred embodiment, the food grade base is selected from sodium hydroxide (NaOH), potassium hydroxide (KOH) and combinations thereof. In a most preferred embodiment, the food grade base is NaOH.

In accordance with a preferred embodiment, the pH of the liquid aqueous mixture is decreased to a value between 7 and 5 after the mixture has been kept at elevated pH for the specified period of time. The pH of the liquid aqueous mixture is preferably decreased by adding a food grade acid, more preferably a food grade acid selected from hydrogen chloride, phosphoric acid, sulfuric acid, acetic acid, citric acid, lactic acid and combinations thereof. In a preferred embodiment the pH is decreased by adding a strong, concentrated food grade acid, for example an aqueous solution of at least 0.5 M hydrogen chloride.

The liquid aqueous mixture employed in step a) of the present method preferably consists of the first egg yolk plasma fraction or is prepared by combining the first egg yolk plasma fraction with water. The first egg yolk plasma fraction preferably contains 80-90 % LDL and 10-20% livetin, both percentages being calculated by weight of the egg yolk proteinaceous component.

The first pre-emulsion that is prepared in step b) of the present method preferably contains 30-90 wt.% oil, 60-8 wt.% water. More preferably, the first pre-emulsion contains 50-85 wt.% oil and 40-13 wt.% water. Even more preferably the first pre-emulsion contains 65-82 wt. % oil, 25-16 wt. % water. The combination of oil and water preferably constitutes at least 80 wt. %, preferably 90 wt.%, more preferably at least 95 wt.% of the first pre-emulsion.

The egg yolk proteinaceous component of the first pre-emulsion preferably has the following composition:

- 15-80 wt.% HDL;
- 4-20 wt.% phosvitin.
- 7-65 wt.% LDL; and
- 0-12 wt.% livetin.

The proteinaceous component of the first pre-emulsion comprises egg yolk components for egg yolk granules fraction and optionally also egg yolk components from egg yolk plasma fraction.

According to a particularly preferred embodiment, the first pre-emulsion is prepared by combining oil, water, egg yolk granules fraction and an egg yolk plasma fraction. The latter egg yolk plasma fraction is referred to herein as the second egg yolk plasma fraction to distinguish said plasma fraction from the first egg yolk plasma fraction that is employed in step a) of the present method. The second egg yolk plasma fraction preferably contains 80-90% LDL and 10-20% livetin, both percentages being calculated by weight of the egg yolk proteinaceous component.

The first pre-emulsion can be produced in any equipment that is capable of thoroughly mixing the ingredients contained therein, e.g. a Silverson mixer.

The egg yolk granules fraction that is employed in the present method preferably contains 65-75 % HDL, 13-20% phosvitin and 10-14% LDL, all percentages being calculated by weight of the proteinaceous component.

In a preferred embodiment of the present method the second egg yolk plasma fraction and the granules egg yolk fraction are employed in the first pre-emulsion in a dry weight ratio in the range of 1:1 to 1:3.5, preferably in the range of 1:2 to 1:3.

In case the preparation of the first pre-emulsion comprises the use of a second egg yolk plasma fraction said first pre-emulsion preferably has the following composition:

15-70 wt.% HDL;
4-18 wt.% phosvitin.

17-65 wt.% LDL; and
1-12 wt.% livetin.

Even more preferably, the first pre-emulsion has the following composition:

15-50 wt.% HDL;
4-12 wt.% phosvitin.
20-65 wt.% LDL; and
5-12 wt.% livetin.

The first egg yolk plasma fraction and the second egg yolk plasma fraction are preferably employed in the present method in a dry weight ratio in the range of 1:1 to 19:1, preferably in the range of 2:1 to 8:1, more preferably in the range of 3:1 to 4:1.

The second pre-emulsion is preferably homogenised in a colloid mill (e.g. ex Ross), a high pressure homogeniser or an inline homogeniser (e.g. ex. Maelstrom IPM).

The present homogenized emulsion may suitably be subjected to a heat treatment to increase the shelf life.

Another aspect of the invention relates to an oil-in-water emulsion that is obtained by the method as described herein.

The invention is further illustrated by the following non-limiting examples.

## EXAMPLES

*Measuring the storage modulus G'*

The storage modulus G' is indicative of an object's ability to be deformed elastically (i.e., non-permanently) when a force is applied to it. The term "storage" in storage modulus refers to the storage of the energy applied to the sample. The stored energy is recovered upon the release of the stress.

The storage modulus of an oil-in-water emulsion is suitably determined by a dynamic oscillatory measurement in which the shear stress is varied (from low to high stress) in a sinusoidal manner. The resulting strain and the phase shift between the stress and strain is measured. From the amplitude of the stress and the strain and the phase angle (phase shift) the storage modulus is calculated. Herein, the G' (Pa) is taken at the plateau region at low stress (linear viscoelastic region).

The storage modulus G' of the emulsions described in the following examples was measured as follows:

- The sample is rested for 3 minutes after the introduction into the rheometer (e.g.TA AR2000EX) to allow relaxation of the stresses accumulated due to the loading of the sample.
- Using a 4 cm 2° cone, a stress sweep is applied in which the oscillatory stress is increased from 0.1 to 1768 Pa in logarithmic steps (15 per decade). This step is terminated when the phase angle exceeds 80'.

## Example 1

Egg yolk plasma fraction and egg yolk granules fractions were prepared from commercially available egg yolk (brand name: Eggstra, supplier: Van Tol Convenience Food) by the following procedure:

- dilute the egg yolk with an equal amount of an aqueous 0.17M NaCl solution and mildly stir for about 1 hour
- centrifuge the egg yolk dispersion at 10,000 g for 45 minutes at 4 °C
- remove supernatant by decanting
- centrifuge the supernatant at 10,000 g for 45 minutes at 4 °C
- the supernatant obtained after the last mentioned centrifugation step represents the egg yolk plasma fraction
- the combined sediments obtained during the centrifugation steps are dispersed in an aqueous 0.17M NaCl solution to produce a stock dispersion having a dry matter content of approximately 40 wt.%. This dispersion represents the egg yolk granules fraction.

The pH of part of the egg yolk plasma fraction so obtained was adjusted to pH 11.5 by adding a sufficient amount of NaOH (1 M), and the fraction was kept in a chilled water bath (approx. 4 °C) for 60 minutes. Next, the pH of the alkaline treated plasma fraction was adjusted to pH 6.0 by adding HCl (1 M).

The untreated egg yolk plasma fraction, the alkaline treated egg yolk plasma fraction and the egg yolk granules fraction were used to prepare mayonnaise products (products 1, 2 and 3) having an oil content higher than 70 wt.% on the basis of the recipes shown in Table 1. As a comparison, a mayonnaise of identical composition (Reference product) was prepared using the whole egg yolk. The recipe of this reference product is also shown in Table 1.

**Table 1**

|  | Ref. | 1 | 2 | 3 |
|---|---|---|---|---|
| Whole egg yolk (dry matter) | 3.50 | - | - | - |
| Egg yolk plasma fraction (dry matter) | - | - | 0.68 | 0.77 |
| Alkaline treated egg yolk plasma fraction (dry matter) | - | 2.70 | 2.02 | 2.31 |
| Egg yolk granules fraction (dry matter) | - | 0.80 | 0.80 | 0.92 |
| Salt | 1.85 | 1.85 | 1.85 | 1.85 |
| Sucrose | 1.30 | 1.30 | 1.30 | 1.30 |
| Preservatives | 0.11 | 0.11 | 0.11 | 0.11 |
| Oil and flavouring additives | 70.23 | 70.23 | 70.23 | 70.23 |
| Water and vinegar | 23.01 | 23.01 | 23.01 | 22.51 |
| **Total** | **100** | **100** | **100** | **100** |

The reference product was prepared by mixing the egg yolk with the other ingredients, except for the oil and vinegar. Next, the oil was slowly added at room temperature using a Silverson L4RT-A homogenizer at 5000 rpm over approximately 8 minutes. Subsequently, vinegar was added and the emulsion was mixed for 2 additional minutes using the homogenizer at 5000 rpm. Then, the emulsion was passed once through a colloid mill (IKA magicLAB, MK) with a grinding gap size of 0.398 mm operating at 7600 rpm. The emulsion samples so produced were stored in glass jars at 5°C.

Mayonnaise product 1 was prepared by mixing the egg yolk granules fraction and the alkaline treated egg yolk plasma fraction with the other ingredients, except for the oil and vinegar. Next, the oil was slowly added at room temperature using a Silverson L4RT-A homogenizer at 5000 rpm over approximately 8 minutes. Subsequently, vinegar was added and the emulsion was further processed in the same way as the Reference product.

Mayonnaise products 2 and 3 were prepared by mixing the egg yolk granules fraction and the untreated egg yolk plasma fraction with the other ingredients, except for the oil and vinegar. Next, the oil was slowly added at room temperature using a Silverson L4RT-A homogenizer at 5000 rpm over approximately 8 minutes. Next, the alkaline treated egg yolk plasma fraction was added followed by homogenization for another 1-2 minutes at 5000 rpm. Subsequently, vinegar was added and the emulsions were further processed in the same way as the Reference product.

The pH and the shear storage modulus G' (at 20°C) of the mayonnaise products were measured. The results are shown in Table 2.

**Table 2**

|  | Ref. | 1 | 2 | 3 |
|---|---|---|---|---|
| pH | 3.8 | 3.8 | 3.8 | 3.8 |
| G'(Pa) | 335 | 371 | 576 | 720 |

**Claims**

1. A method of preparing an edible oil-in-water emulsion having a pH in the range of 3.0 to 5.0 and comprising 30-78 wt.% of oil and 65-20 wt.% water, and further 0.5-6 wt.% hen's egg yolk proteinaceous component by dry weight, said egg yolk proteinaceous component consisting of a combination of low-density lipoprotein (LDL), livetin, high-density lipoprotein (HDL), and phosvitin, said method comprising the steps of:

   a. increasing the pH of a liquid aqueous mixture comprising a first egg yolk plasma fraction to a pH of at least 9 and keeping the liquid aqueous mixture at said pH for 1-300 minutes followed by decreasing the pH of the mixture to a pH of 7 or less to produce an alkaline treated egg yolk plasma liquid comprising alkaline treated egg yolk plasma fraction;

   b. preparing a first pre-emulsion by combining oil, water, egg yolk granules fraction and optionally a second

8

egg yolk plasma fraction;

c. combining the alkaline treated egg yolk plasma liquid with the pre-emulsion to produce a second pre-emulsion;

d. introducing into the second pre-emulsion one or more acidulants; and

e. homogenizing the second pre-emulsion to obtain an oil-in-water emulsion;

wherein the egg yolk proteinaceous component of the oil-in-water emulsion has the following composition:

- 60-75 wt.% LDL;
- 8-14 wt.% livetin;
- 11-18 wt.% HDL;
- 2-5 wt.% phosvitin.

2. Method according to claim 1, wherein the pH of the liquid aqueous mixture is increased to a pH of at least 9 by adding a food grade base and wherein the pH of the liquid is aqueous mixture is decreased by adding a food grade acid.

3. Method according to claim 1 or 2, wherein the liquid aqueous mixture contains at least 40 wt.% water and wherein the egg yolk proteinaceous component of the liquid aqueous mixture has the following composition:

- 70-90 wt.% LDL
- 10-25 wt.% livetin;
- 0-10 wt.% HDL; and
- 0-5 wt.% phosvitin.

4. Method according to any one of the preceding claims, wherein the first pre-emulsion contains 30-90 wt.% oil, 60-8 wt.% water and wherein the egg yolk proteinaceous component of the first pre-emulsion has the following composition:

- 15-80 wt.% HDL;
- 4-20 wt.% phosvitin.
- 7-65 wt.% LDL; and
- 0-12 wt.% livetin.

5. Method according to any one of the preceding claims, wherein the first pre-emulsion is prepared by combining oil, water, egg yolk granules fraction and a second egg yolk plasma fraction and wherein the egg yolk proteinaceous component of the first pre-emulsion has the following composition:

- 15-70 wt.% HDL;
- 4-18 wt.% phosvitin.
- 17-65 wt.% LDL; and
- 1-12 wt.% livetin.

6. Method according claim 5, wherein the second egg yolk plasma fraction and the granules egg yolk fraction are employed in the first pre-emulsion in a dry weight ratio in the range of 1:1 to 1:3.5, preferably in the range of 1:2 to 1:3.

7. Method according to claim 5 or 6, wherein the first egg yolk plasma fraction and the second egg yolk plasma fraction are employed in the method in a dry weight ratio in the range of 1:1 to 19:1, preferably in the range of 2:1 to 8:1, more preferably in the range of 3:1 to 4:1.

8. Method according to any one of the preceding claims, wherein the liquid aqueous mixture consists of the first egg yolk plasma fraction or is prepared by combining the first egg yolk plasma fraction with water, and wherein the first egg yolk plasma fraction and the second egg yolk plasma fraction contain 80-90% LDL and 10-20 % livetin, both percentages being calculated by weight of the egg yolk proteinaceous component.

9. Method according to any one of the preceding claims, wherein the egg yolk granules fraction contains 65-75% HDL, 13-20% phosvitin and 10-14% LDL, all percentages being calculated by weight of the proteinaceous component.

10. Method according to any one of the preceding claims, wherein the method comprises introducing into the second pre-emulsion one or more acidulants selected from acetic acid, citric acid, malic acid and lactic acid.

**11.** Method according to claim 10, wherein the one or more acidulants are added to the second pre-emulsion before the homogenization.

**12.** Method according to any one of the preceding claims, wherein the liquid aqueous mixture prior to the alkaline treatment of step a) contains 0.2-10, preferably 0.4-5 wt.% sodium chloride in dissociated form.

**13.** Method according to any one of the preceding claims, wherein the second pre-emulsion is homogenised in a colloid mill, a high-pressure homogenizer or an inline homogenizer.

**14.** An oil-in-water emulsion that is obtained by the method according to any one of the preceding claims.


**Patentansprüche**

**1.** Verfahren zur Herstellung einer essbaren Öl-in-Wasser-Emulsion mit einem pH-Wert im Bereich von 3,0 bis 5,0 und umfassend 30 - 78 Gew.-% Öl und 65 - 20 Gew.-% Wasser und ferner 0,5 - 6 Gew.-% proteinhaltige Hühnereigelb-Komponente, bezogen auf das Trockengewicht, wobei die proteinhaltige Eigelb-Komponente aus einer Kombination von Lipoprotein niedriger Dichte (LDL), Livetin, Lipoprotein hoher Dichte (HDL) und Phosvitin besteht, wobei das Verfahren die folgenden Schritte umfasst:

a. Erhöhen des pH-Werts einer flüssigen, wässrigen Mischung, umfassend eine erste Eigelb-Plasmafraktion auf einen pH-Wert von mindestens 9 und Halten der flüssigen, wässrigen Mischung bei diesem pH-Wert für 1 - 300 Minuten, gefolgt von der Senkung des pH-Werts der Mischung auf einen pH-Wert von 7 oder weniger, um eine alkalisch behandelte Eigelb-Plasmaflüssigkeit, umfassend alkalisch behandelte Eigelb-Plasmafraktion, zu erzeugen;
b. Herstellen einer ersten Voremulsion durch Vereinigen von Öl, Wasser, Eigelb-Granulatfraktion und gegebenenfalls einer zweiten Eigelb-Plasmafraktion;
c. Kombinieren der alkalisch behandelten Eigelb-Plasmaflüssigkeit mit der Voremulsion, um eine zweite Voremulsion herzustellen;
d. Einbringen eines oder mehrerer Säuerungsmittel in die zweite Voremulsion; und
e. Homogenisieren der zweiten Voremulsion, um eine Öl-in-Wasser-Emulsion zu erhalten; wobei die proteinhaltige Eigelb-Komponente der Öl-in-Wasser-Emulsion die folgende Zusammensetzung aufweist:

• 60 - 75 Gew.-% LDL;
• 8 - 14 Gew.-% Livetin;
• 11 - 18 Gew.-% % HDL;
• 2 - 5 Gew.-% Phosvitin.

**2.** Verfahren nach Anspruch 1, wobei der pH-Wert der flüssigen, wässrigen Mischung durch Zugabe einer Base von Lebensmittelqualität auf einen pH-Wert von mindestens 9 erhöht wird und wobei der pH-Wert der Flüssigkeit der wässrigen Mischung durch Zugabe einer Säure von Lebensmittelqualität gesenkt wird.

**3.** Verfahren nach Anspruch 1 oder 2, wobei die flüssige, wässrige Mischung mindestens 40 Gew.-% Wasser enthält und wobei die proteinhaltige Eigelb-Komponente der flüssigen, wässrigen Mischung die folgende Zusammensetzung aufweist:

• 70 - 90 Gew.-% LDL;
• 10 - 25 Gew.-% Livetin;
• 0 - 10 Gew.-% % HDL; und
• 0 - 5 Gew.-% Phosvitin.

**4.** Verfahren nach irgendeinem der vorhergehenden Ansprüche, wobei die erste Voremulsion 30 - 90 Gew.-% Öl, 60 - 8 Gew.-% Wasser enthält und wobei die proteinhaltige Eigelb-Komponente der ersten Voremulsion die folgende Zusammensetzung aufweist:

• 15 - 80 Gew.-% HDL;
• 4 - 20 Gew.-% Phosvitin;
• 7 - 65 Gew.-% % LDL; und

• 0 - 12 Gew.-% Livetin.

5.  Verfahren nach irgendeinem der vorhergehenden Ansprüche, wobei die erste Voremulsion durch Vereinigen von Öl, Wasser, Eigelb-Granulatfraktion und einer zweiten Eigelb-Plasmafraktion hergestellt wird und wobei die proteinhaltige Eigelb-Komponente der ersten Voremulsion die folgende Zusammensetzung aufweist:

    • 15 - 70 Gew. % HDL;
    • 4 - 18 Gew.-% Phosvitin;
    • 17 - 65 Gew.-% % LDL; und
    • 1 - 12 Gew.-% Livetin.

6.  Verfahren nach Anspruch 5, wobei die zweite Eigelb-Plasmafraktion und die Granulat-Eigelbfraktion in der ersten Voremulsion in einem Trockengewichtsverhältnis im Bereich von 1:1 bis 1:3,5, bevorzugt im Bereich von 1:2 bis 1:3, eingesetzt werden.

7.  Verfahren nach Anspruch 5 oder 6, wobei die erste Eigelb-Plasmafraktion und die zweite Eigelb-Plasmafraktion in dem Verfahren in einem Trockengewichtsverhältnis im Bereich von 1:1 bis 19:1, bevorzugt im Bereich von 2:1 bis 8:1, bevorzugter im Bereich von 3:1 bis 4:1, eingesetzt werden.

8.  Verfahren nach irgendeinem der vorhergehenden Ansprüche, wobei die flüssige, wässrige Mischung aus der ersten Eigelb-Plasmafraktion besteht oder durch Kombinieren der ersten Eigelb-Plasmafraktion mit Wasser hergestellt wird und wobei die erste Eigelb-Plasmafraktion und die zweite Eigelb-Plasmafraktion 80 - 90% LDL und 10 - 20% Livetin enthalten, wobei beide Prozentsätze auf das Gewicht der proteinhaltigen Eigelb-Komponente bezogen sind.

9.  Verfahren nach irgendeinem der vorhergehenden Ansprüche, wobei die Eigelb-Granulatfraktion 65 - 75% HDL, 13 - 20% Phosvitin und 10 - 14% LDL enthält, wobei alle Prozentangaben auf das Gewicht der proteinhaltigen Komponente bezogen sind.

10. Verfahren nach irgendeinem der vorhergehenden Ansprüche, wobei das Verfahren das Einbringen eines oder mehrerer Säuerungsmittel, die aus Essigsäure, Citronensäure, Äpfelsäure und Milchsäure ausgewählt sind, in die zweite Voremulsion umfasst.

11. Verfahren nach Anspruch 10, wobei das eine oder die mehreren Säuerungsmittel der zweiten Voremulsion vor der Homogenisierung zugesetzt werden.

12. Verfahren nach irgendeinem der vorhergehenden Ansprüche, wobei die flüssige, wässrige Mischung vor der alkalischen Behandlung von Schritt a) 0,2 - 10, bevorzugt 0,4 - 5, Gew.-% Natriumchlorid in dissoziierter Form enthält.

13. Verfahren nach irgendeinem der vorhergehenden Ansprüche, wobei die zweite Voremulsion in einer Kolloidmühle, einem Hochdruckhomogenisator oder einem Inline-Homogenisator homogenisiert wird.

14. Öl-in-Wasser-Emulsion, die nach dem Verfahren nach irgendeinem der vorhergehenden Ansprüche erhalten wird.

**Revendications**

1.  Procédé de préparation d'une émulsion huile-dans-eau comestible présentant un pH dans l'intervalle de 3,0 à 5,0 et comprenant 30-78 % en masse d'huile et 65-20 % en masse d'eau et de plus 0,5-6 % en masse de constituant protéiné de jaune d'œuf de poule par masse sèche, ledit constituant protéiné de jaune d'œuf consistant en une combinaison de lipoprotéine basse densité (LDL), livétine, lipoprotéine haute densité (HDL), et phosvitine, ledit procédé comprenant les étapes de :

    a. augmentation du pH d'un mélange aqueux liquide comprenant une première fraction de plasma de jaune d'œuf à un pH d'au moins 9 et maintenant le mélange aqueux liquide audit pH pendant 1-300 minutes suivie par une diminution du pH du mélange à un pH de 7 ou inférieur pour produire un liquide de plasma de jaune d'œuf traité à l'alcali comprenant une fraction de plasma de jaune d'œuf traité à l'alcali ;
    b. préparation d'une première pré-émulsion par combinaison d'huile, d'eau, de fraction de granulés de jaune d'œuf et éventuellement d'une seconde fraction de plasma de jaune d'oeuf ;

c. combinaison du liquide de plasma de jaune d'œuf traité à l'alcali avec la pré-émulsion pour produire une seconde pré-émulsion ;

d. introduction dans la seconde pré-émulsion d'un ou plusieurs acidulants ; et

e. homogénéisation de la seconde pré-émulsion pour obtenir une émulsion huile-dans-eau ;

dans lequel le constituant protéiné de jaune d'œuf de l'émulsion huile-dans-eau présente la composition suivante :

- 60-75 % en masse de LDL ;
- 8-14 % en masse de livétine ;
- 11-18 % en masse de HDL ;
- 2-5 % en masse de phosvitine.

2. Procédé selon la revendication 1, dans lequel le pH du mélange aqueux liquide est augmenté à un pH d'au moins 9 par addition d'une base de qualité alimentaire et dans lequel le pH du mélange aqueux liquide est diminué par addition d'un acide de qualité alimentaire.

3. Procédé selon la revendication 1 ou 2, dans lequel le mélange aqueux liquide contient au moins 40 % en masse d'eau et dans lequel le constituant protéiné de jaune d'œuf du mélange aqueux liquide présente la composition suivante :

- 70-90 % en masse de LDL ;
- 10-25 % en masse de livétine ;
- 0-10 % en masse de HDL ; et
- 0-5 % en masse de phosvitine.

4. Procédé selon l'une quelconque des revendications précédentes, dans lequel la première pré-émulsion contient 30-90 % en masse d'huile, 60-8 % en masse d'eau et dans lequel le constituant protéiné de jaune d'œuf de la première pré-émulsion présente la composition suivante :

- 15-80 % en masse de HDL ;
- 4-20 % en masse de phosvitine.
- 7-65 % en masse de LDL ; et
- 0-12 % en masse de livétine.

5. Procédé selon l'une quelconque des revendications précédentes, dans lequel la première pré-émulsion est préparée par combinaison d'huile, d'eau, de fraction de granulés de jaune d'œuf et d'une seconde fraction de plasma de jaune d'œuf et dans lequel le constituant protéiné de jaune d'œuf de la première pré-émulsion présente la composition suivante :

- 15-70 % en masse de HDL ;
- 4-18 % en masse de phosvitine.
- 17-65 % en masse de LDL ; et
- 1-12 % en masse de livétine.

6. Procédé selon la revendication 5, dans lequel la seconde fraction de plasma de jaune d'œuf et la fraction de jaune d'œuf en granulés sont utilisées dans la première pré-émulsion dans un rapport de masse sèche dans l'intervalle de 1:1 à 1:3,5, de préférence dans l'intervalle de 1:2 à 1:3.

7. Procédé selon la revendication 5 ou 6, dans lequel la première fraction de plasma de jaune d'œuf et la seconde fraction de plasma de jaune d'œuf sont utilisées dans le procédé dans un rapport de masse sèche dans l'intervalle de 1:1 à 19:1, de préférence dans l'intervalle de 2:1 à 8:1, encore mieux dans l'intervalle de 3:1 à 4:1.

8. Procédé selon l'une quelconque des revendications précédentes, dans lequel le mélange aqueux liquide consiste en la première fraction de plasma de jaune d'œuf ou est préparé en combinant la première fraction de plasma de jaune d'œuf avec de l'eau, et dans lequel la première fraction de plasma de jaune d'œuf et la seconde fraction de plasma de jaune d'œuf contiennent 80-90 % de LDL et 10-20 % de livétine, les deux pourcentages étant calculés en masse du constituant protéiné de jaune d'œuf.

9. Procédé selon l'une quelconque des revendications précédentes, dans lequel la fraction de granulés de jaune d'œuf contient 65-75 % de HDL, 13-20 % de phosvitine et 10-14 % de LDL, tous les pourcentages étant calculés en masse du constituant protéiné.

10. Procédé selon l'une quelconque des revendications précédentes, dans lequel le procédé comprend l'introduction dans la seconde pré-émulsion d'un ou plusieurs acidulants choisis parmi l'acide acétique, l'acide citrique, l'acide malique et l'acide lactique.

11. Procédé selon la revendication 10, dans lequel les un ou plusieurs acidulants sont ajoutés à la seconde pré-émulsion avant l'homogénéisation.

12. Procédé selon l'une quelconque des revendications précédentes, dans lequel le mélange aqueux liquide avant le traitement à l'alcali de l'étape a) contient 0,2-10, de préférence 0,4-5 % en masse de chlorure de sodium dans une forme dissociée.

13. Procédé selon l'une quelconque des revendications précédentes, dans lequel la seconde pré-émulsion est homogénéisée dans un broyeur colloïdal, un homogénéisateur haute pression ou un homogénéisateur en ligne.

14. Emulsion huile-dans-eau qui est obtenue par le procédé selon l'une quelconque des revendications précédentes.

## REFERENCES CITED IN THE DESCRIPTION

**Patent documents cited in the description**

- WO 2008080737 A

- US 6235336 B

**Non-patent literature cited in the description**

- **BURLEY et al.** ISOLATION AND COMPOSITION OF AVIAN EGG YOLK GRANULES AND THEIR CONSTITUENT α-AND β-LIPOVITELLINS. *Canadian Journal of Biochemistry and Physiology,* 1961, vol. 39 (8), 1295-1307